# EUROPEAN PATENT SPECIFICATION

(11) **EP 1 687 077 B1**
(45) Date of publication and mention of the grant of the patent: **15.09.2010**
(21) Application number: 04798441.4
(22) Date of filing: 05.11.2004
(51) Int. Cl.: B01D 29/23

(54) **FILTER APPARATUS**
FILTERAPPARAT
APPAREIL DE FILTRATION

(30) Priority: 05.11.2003 GB 0325820; 16.06.2004 GB 0413399
(43) Date of publication of application: 09.08.2006
(73) Proprietor: Clayson, Andrew, Broughty Ferry, Dundee DD5 1JS (GB)
(72) Inventor: Clayson, Andrew, Broughty Ferry, Dundee DD5 1JS (GB)
(74) Representative: Moreland, David
(86) International application number: PCT/GB2004/004718
(87) International publication number: WO 2005/044419

(56) References cited:
- EP-A- 0 278 080
- DE-U- 20 005 756
- FR-A- 2 754 465
- GB-A- 2 067 085
- US-A- 2 332 188
- US-A- 3 849 312
- US-A- 4 081 379
- US-A- 4 430 223
- US-A- 4 604 203

## Description

### FIELD OF INVENTION

The present invention relates to cooking oil or cooking fat or "shortening" filter apparatus and to a cooking apparatus, such as a deep fat fryer comprising such a filter apparatus. Such cooking apparatus can be found in commercial premises such as fast food outlets, take-aways, factory or other food preparation premises or the like.

### BACKGROUND TO INVENTION

Filtration is a large technical field, and filters for oils and fats exist. The Applicant has, however, identified a particular need for an improved filter apparatus for oils and fats, particularly in cooking apparatus using oils or fats, e.g. in food outlets such as fast food outlets, or in factory or food preparation premises. Such cooking apparatus may comprise a deep fat fryer.

There are particular problems and desires in the use of industrial cooking oils and fats, e.g.:
difficulty of disposal - even though typically 12% of volume is absorbed, in use;
existence and build-up of harmful "free radicals";
a desire to extend the lifetime of the oil/fat;
a desire to keep the oil/fat relatively clean, dirty oil being more difficult to cook with;
a desire for in-line filtering of oils/fats, allowing recycling thereof.

The Applicant has identified several issues that may be addressed in providing an improved filter apparatus, e.g.:
(1) Fats in particular have to be kept above approximately 30°C to be liquid. In most cases a frying temperature is in the range of 160°C to 190°C. It is therefore desirable to provide a low cost filter apparatus capable of dealing with solid and liquid fats at both normal room temperature and at very high temperatures.
(2) Fats particularly are very viscous even at high temperature so the viscous drag imposed on a filter is high. A large surface area is therefore required if suction pressure requirements of the pump which pulls fat through the filter are to be kept low. Pumps generally do not develop high suction conditions.
(3) Cleaning is critical. A filter is desirably readily cleanable and changeable and retains all debris, at least during changing. Large particles (above 1000 microns) cannot normally be absorbed by a filter media such as paper (the pore sizes being too small), so are desirably retained in some form of basket or cup.
(4) As oil and fats are essentially low cost commodities, the filter ought not to retain excessive oil or fat when disposed of.
(5) A filter apparatus ought not to be too heavy to handle easily, and portable units are desirably simple and inherently safe to use.

Filter designs addressing some of these issues can be found in many car, truck and lubricating oil systems. However, these are not in the same technical field as the present invention. These are cartridge filters and consist of a paper (or similar) pleated filter element held within a metal or plastic can. The can holds the large particles that cannot be absorbed by the paper element and the cartridge filter is disposed of on an infrequent basis.

Known filters use sealing elements to separate a suction side from a discharge. This means that the seal needs to be compressed in some way and the filter apparatus becomes costly.

In a similar vein filter bags (as found on vacuum cleaners) have been developed, but again require sealing elements to separate suction from discharge.

It is an object of at least one embodiment of at least one aspect of the present invention to obviate or at least mitigate one or more problems or disadvantages in the art.

It is a further object of at least one embodiment of at least one aspect of the present invention to seek to fill one or more of the needs in the art mentioned hereinbefore.

It is a yet further object of at least one embodiment of at least one aspect of the present invention to seek to provide a low cost, easily emptiable, easily replaceable filter, which advantageously retains both large and small filtered particles.

### SUMMARY OF INVENTION

According to a first aspect of the present invention there is provided a cooking oil and/or cooking fat filter apparatus, the apparatus comprising:
a filter means; and
a cup for receiving matter from a liquid being filtered, in use, wherein the filter means and the cup form a single cup and filter body, and the said body comprises at least one annular cup means;
inlet means above the filter means for delivery of unfiltered liquid to the filter means, and the cup and outlet means for removal of filtered liquid from the filter means;
further comprising filter support means comprising a substantially rigid body having an inner surface which at least in part, closely fits with a discharge side surface of the filter means, the filter support means comprising at least one annular portion, wherein
the filter support means provides means to transport filtered liquid from a discharge side of the filter means to the outlet means;
wherein, in use, at least one seal is formed between an upper end of the filter means and an upper end of the filter support means by cooking oil and/or cooking fat, and below said at least one seal the transport means guides filtered liquid which has passed through the filter means to the outlet means.

By such an arrangement a viscous nature of the liquid is used to provide the at least one seal between a suction side and a discharge side of the filter means. The filter apparatus can therefore conveniently be termed "self sealing".

The at least one seal may be provided by virtue of the liquid adhering to the filter support means and/or filter means and providing the at least one seal through viscous tension.

In a preferred implementation of the present invention the filter means and cup are integrally formed in the single cup and filter body.

Preferably the cup and filter body comprise a sheet form member, e.g. a flat sheet form member which may be formed or folded so as to form the cup. The sheet form member may be made from a material having filtering properties.

By such an arrangement there is provided a single body which filters and retains large particulate material or filtrate via the cup and filters and retains small or fine particles via the filter means.

The cup may comprise a plurality of cup means.

The cup may comprise a plurality of substantially concentric annular cup means. This arrangement is particularly advantageous in providing a relatively high filtering surface area within a given cup volume.

Advantageously the filter means may be made from a cellulose fabric, e.g. rayon or viscose. Alternatively, the filter means may be made from paper, polyester, PTFE or the like. Most advantageously the filter means may be made from polyester. Such may permit adequate heat bonding of the filter means, for example during forming the single cup and filter body.

A suction side surface of the cup may comprise an annular receiving space.

The filter support means may comprise a plurality of substantially concentric annular portions.

The filter support means may be manufactured from a high temperature resistant material which is suitable for use with food products. For example, the filter support means may be made from a food grade metal or a food grade high temperature resistant plastic or composite or the like.

In a first embodiment the inlet means may be above the filter means, when in situ, and the outlet means may be below the filter means.

In a second embodiment the inlet means may be above the filter means, when in situ, and the outlet means may be above the filter means.

Beneficially the cup and filter body may have a side cross-section in the shape of a "W". Alternatively, the filter means may have a side cross-section in the shape of a "V". Most beneficially the single cup and filter body may have a side cross section in the shape of a plurality of "V"s, e.g. at least four "V"s.

Beneficially also the filter support means may have a side cross-section in the shape of a "W". Alternatively, the filter support means may have a side cross-section in the shape of a "V". Most beneficially also the filter support means may have a side cross-section in the shape of a plurality of "V"s, e.g. at least four "V"s.

The single cup and filter body may comprise a first frusto-conical portion and a second frusto-conical portion, advantageously, the first frusto-conical portion being provided within the second frusto-conical portion, the second frusto-conical portion being inverted relative to the first frusto-conical portion, a narrow end of the first frusto-conical portion being joined integrally or otherwise with a wide end of the second frusto-conical portion.

In an advantageous implementation the single cup and filter body comprises first, second, third and fourth frusto-conical portions, advantageously the frusto-conical portions being provided one within the other, the second and fourth frusto-conical portions being inverted relative to the first and third frusto-conical portions, one end of one frusto-conical portion being joined integrally or otherwise with an adjacent end of an adjacent or otherwise frusto-conical portion.

Preferably, the cup and filter body is substantially symmetrical about every plane extending through a central axis thereof.

The cup and filter body may be in the form of a cone or frustum. In one embodiment the single cup and filter body may define a "V" shape in cross-section, such that a single cup is provided.

Alternatively, the cup and filter body may comprise one or more annular cups. For example, the filter body may be in the form of a cone or frustum which has been partially inverted to define a "W" cross-sectional shape, such that a single annular cup is provided. Preferably, the cone or frustum is partially inverted such that a lower edge of the cone or frustum, is aligned with an upper edge thereof. More specifically, in this embodiment the filter body may comprise a first frusto-conical portion and a second frusto-conical portion located within an inverted second frusto-conical portion, wherein a narrow end of the first frusto-conical portion is joined integrally or otherwise with a wide end of the second frusto-conical portion.

In the first embodiment the transport means may comprise a plurality of apertures or passages, e.g. holes, slots, conduits or the like, in the filter support means. By such arrangement, in use, filtered liquid may pass through the filter support means.

In the second embodiment the transport means may comprise a plurality of channels provided or formed on a surface of the filter support means. By such arrangement, in use, filtered liquid may pass along the filter support means.

Advantageously, the filter apparatus provides means for detachably attaching the filter means thereto. This facilitates emptying, cleaning or changing of the filter means.

Preferably the detachable attachment means comprises means for releasably connecting the filter support means to the inlet means and outlet means.

Preferably the releasable connection means comprises a quick release coupling such as a bayonet fitting.

Preferably the inlet means includes a rotary coupling.

Preferably also, the outlet means includes a further rotary coupling.

According to a second aspect of the present invention there is provided a cooking apparatus comprising a cooking oil and/or cooking fat filter apparatus according to the first aspect of the present invention.

The cooking apparatus may comprise a commercial cooking apparatus, adapted for use in a food outlet such as a restaurant or fast food outlet or take-way premises. Alternatively the cooking apparatus may be adapted for use in a factory setting.

The cooking apparatus may comprise a frying machine such as a deep fat fryer.

The cooking apparatus may be gas or electric powered.

According to a third aspect of the present invention there is provided a use of a cup and filter body in a cooking oil and/or cooking fat filter apparatus according to the first aspect of the present invention.

### BRIEF DESCRIPTION OF DRAWINGS

Embodiments of the present invention will now be described by way of example only, and with reference to the accompanying drawings, which are:
- **Figure 1**: a schematic view of a first cooking apparatus providing a filter apparatus according to a first embodiment of the present invention;
- **Figure 2**: a schematic side view of the filter apparatus of the cooking apparatus of Figure 1;
- **Figure 3**: a perspective view from one side and above of a filter means of the filter apparatus of Figure 2;
- **Figure 4**: a planar view of the filter means of Figure 3 prior to forming;
- **Figure 5**: a perspective view of part of a second cooking apparatus providing a filter apparatus according to a second embodiment of the present invention;
- **Figure 6**: a perspective view to an enlarged scale of the filter apparatus of Figure 5, in use;
- **Figure 7(a)**: a further perspective view to an enlarged scale of the filter apparatus of Figure 5, in use, shown cut-away and with the filter means thereof removed;
- **Figure 7(b)**: a sectional view taken along line A - A of the filter apparatus of Figure 7(a);
- **Figure 8**: a sectional view taken along line B - B of the filter apparatus of Figure 6;
- **Figure 9**: a schematic side view of an encircled portion of the filter apparatus of Figures 5 to 8 to an enlarged scale.
- **Figure 10**: an alternative perspective view of the cooking apparatus of Figure 5;
- **Figure 11**: a perspective view from one side and to an enlarged scale of rotary couplers of the filter apparatus of Figure 5;
- **Figure 12**: a perspective view from above of a filter means for use in a filter apparatus according to a third embodiment of the present invention;
- **Figure 13**: a side view of the filter means of Figure 12; and
- **Figure 14**: a top view of the filter means of Figure 12.

### DETAILED DESCRIPTION OF DRAWINGS

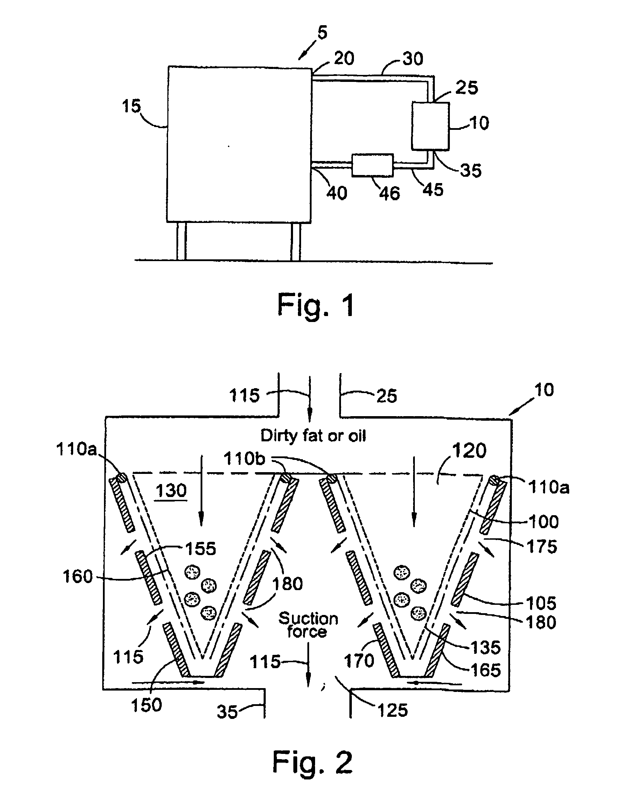

Referring firstly to Figure 1, there is illustrated a cooking apparatus, generally designated 5, including a filter apparatus 10 according to a first embodiment of the present invention. The cooking apparatus 5 also comprises a deep fast fryer unit 15, an outlet 20 from the fryer unit 15 connected to an inlet 25 to the filter apparatus 10 by first pipe work 30, and an outlet 35 from the filter apparatus 10 connected to an inlet 40 of the fryer unit 15 by second pipe work 45. A pump 46 is provided within pipe work 45.

The cooking apparatus 5 is particularly adapted for commercial use, e.g. in a fast food or take-away outlet. However, the cooking apparatus 5 can be adapted for other uses, e.g. in a factory or other food preparation premises. The cooking apparatus 5 can typically be powered by gas or electricity.

Turning next to Figures 2 to 4, there is illustrated the filter apparatus 10 of Figure 1 according to the first embodiment of the present invention. The filter apparatus 10 comprises: a liquid permeable filter means 100, and at least one filter support means 105, wherein, in use, seals 110a, 110b are formed between the filter means 100 and a filter support means 105 by a liquid 115 being filtered.

By such an arrangement a viscous nature of the liquid 115 is used to provide seals 110a, 110b between a suction side 120 and a discharge side 125 of the filter means 100. The filter apparatus 10 can therefore conveniently be termed "self sealing".

It is believed that the seals 110a, 110b are provided, in use, by virtue of the liquid 115 adhering to the filter support means 105 and/or filter means 100, thereby providing the seals 110a,110b through viscous tension.

The filter apparatus 10 further comprises a cup 130 for receiving matter from the liquid 115 being filtered, in use. The filter means 100 and cup 130 comprises a single or unitary cup and filter body 135, the cup and filter body 135 comprising a sheet form member 140, which is formed or folded so as to form the cup 130. A suction side surface 141 of the cup 130 provides an annular receiving space 145. By such an arrangement there is provided a single body 135 which filters and retains large particles in the cup 130 and filter and retains small or fine particles via the filter means 100.

The filter means 100 is typically made from a cellulose fabric, e.g. rayon or viscose. Alternatively, the filter means 100 can be made from paper, advantageously polyester, or alternatively PTFE or the like. Rayon is typically any of various shiny textile fibres and fabrics made from cellulose. Rayon is typically produced by pressing whatever cellulose solution is used through very small holes and solidifying the resulting filaments. A common type is viscose, which consists of regenerated filaments of pure cellulose. Acetate and triacetate are kinds of rayon consisting of filaments of cellulose acetate and triacetate. In a preferred arrangement the filter means is made from polyester. This permits adequate heat bonding of the filter means, for example during forming the single cup and filter body.

The filter support means 105 comprises a filter support body 150. The filter support body 150 comprises a substantially rigid body having an inner surface 155 which at least in part closely fits with a discharge side surface 160 of the filter means 100. The filter support means 105 is typically made from food grade metal. Alternatively the filter support means 105 is made from a high temperature resistant plastic similarly suitable for food use.

The filter apparatus 10 comprises inlet 25 for delivery of unfiltered liquid to the filter means 100, and outlet 35 for removal of filtered liquid from the filter means 100.

In this first embodiment, the inlet 25 is above the filter means 100, and the outlet 35 is below the filter means 100, when in situ. This provides for sideways removal and installation of the single cup and filter body 135 as will become apparent hereinafter.

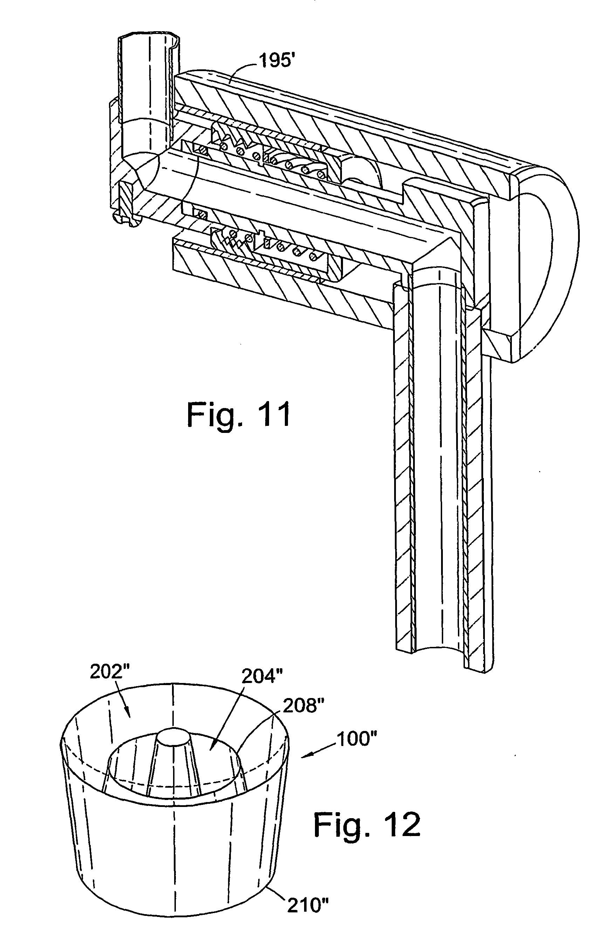

The single cup and filter body 135 has a side cross-section in the shape of a "W" or double "V". In modifications, however, the filter means 100 can have a side cross-section in the shape of a single or multiple "V" e.g. the double "W" or quadruple "V" of Figures 12, 13 and 14 described hereinbelow. The filter support body 150 also has a side cross-section in the shape of a "W" or double "V". Alternatively, in modifications the filter support body 150 can also have a side cross-section in the shape of a single or multiple "V" e.g. the double "W" or quadruple "V" of Figures 12, 13 and 14 described hereinbelow. Generally, the facing surfaces of the filter support body 150 and filter means 100 will be of the same general shape.

In this first embodiment the cup and filter body 135 comprises a first frusto-conical portion 165 and a second frusto-conical portion 170, the second frusto-conical portion 170 being provided within the first frusto-conical portion 165, the second frusto-conical portion 170 being inverted relative to the first frusto-conical portion 165, a narrow end of the first frusto-conical portion 165 being advantageously integral or alternatively otherwise sealably connected with a wide end of the second frusto-conical portion 170.

The filter support body 150 provides means 175 to transport filtered liquid from a discharge side of the filter means 100 to the outlet 35.

In this first embodiment the transport means 175 comprises a plurality of apertures or passages 180, e.g. holes, slots, conduits or the like, in the filter support body 150. By such arrangement, in use, filtered liquid 115 can pass through the filter support body 150.

The filter apparatus 10 provides means (not shown) for detachably attaching the filter means 100 thereto. This facilitates emptying, cleaning or changing of the filter means 100. The detachable attachment means comprises means (not shown) for releasably connecting the filter support body 150 to the inlet 25 and outlet 35.

Referring again to Figures 2 to 4, the filter means 100 consists of a circular "cone within a cone" form. The "W" cross-section of the filter means 100 is formed by a "V" section which is rotated to form the "W".

In use, oil passes into the filter means 100 from inlet 25 and is directed into the "V" section. The geometry allows fat or oil to pass through the filter means 100 whilst retaining large debris in the "V". Smaller or fine debris passes into the filter means 100 and is held or retained by the fibre structure of the filter means 100, e.g. in interstices thereof. In this way both fine and large debris is held within the single body 135.

The properties of the fluid being viscous are used to create seals 110a,110b between the filter support means 105 and the filter means 100. The geometry of the filter means 100 is such that the net suction force drawing oil through the filter media reinforces the seals 110a,110b. Clean or filtered oil 115 is drawn by suction force down and through the outlet 35.

Means to increase a surface area of the filter means 100 could include pleating, multiple filter cones and different forms. It will be appreciated that different forms could be used such as a simple cup, but the "W" section provides for ease of removal.

Referring particularly to Figure 2, a top part of each frusto-conical portion 165,170 contacts with a solid face, i.e. non-filtering element, in the filter support means 105. Below this face the filter means 100 is supported by the filter support means 105 comprising ribs which allow liquid to pass through. The filter means 100 "sticks" to the solid face and seals through viscous tension. The solid support face therefore prevents oil flowing through the filter material at this section.

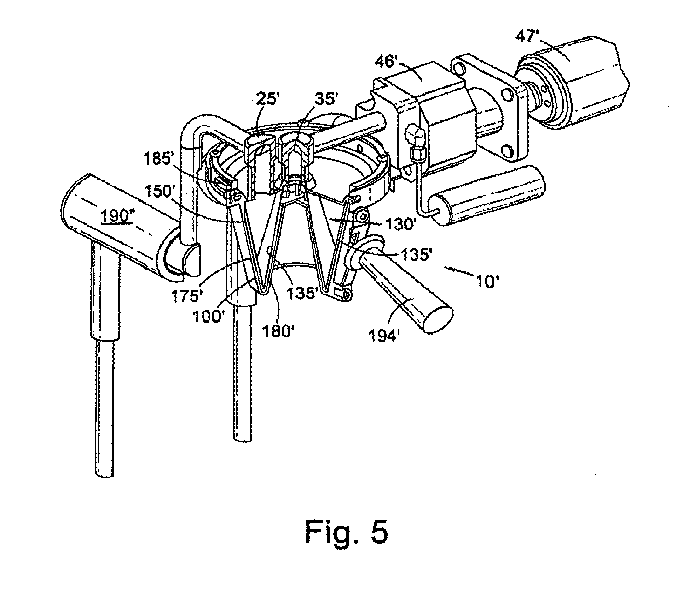

Turning now to Figures 5 to 11, there is illustrated a filter apparatus 10' according to a second embodiment of the present invention, and which can also be used in the cooking apparatus 5 of Figure 1. The filter apparatus 10' of the second embodiment is similar in many respects to the filter apparatus 10 of the first embodiment, like parts being denoted by like numerals, but suffixed with "'".

The filter apparatus 10' of the second embodiment differs from the filter apparatus 10 of the first embodiment in the following respects.

In the second embodiment, the inlet 25' is above the filter means 100', and the outlet 35' is also above the filter means 100'. This provides for sideways and/or downwards removal of the single cup and filter body 135' from the filter apparatus 10', and sideways and/or upwards installation of the single cup and filter body 135' on the filter apparatus 10'.

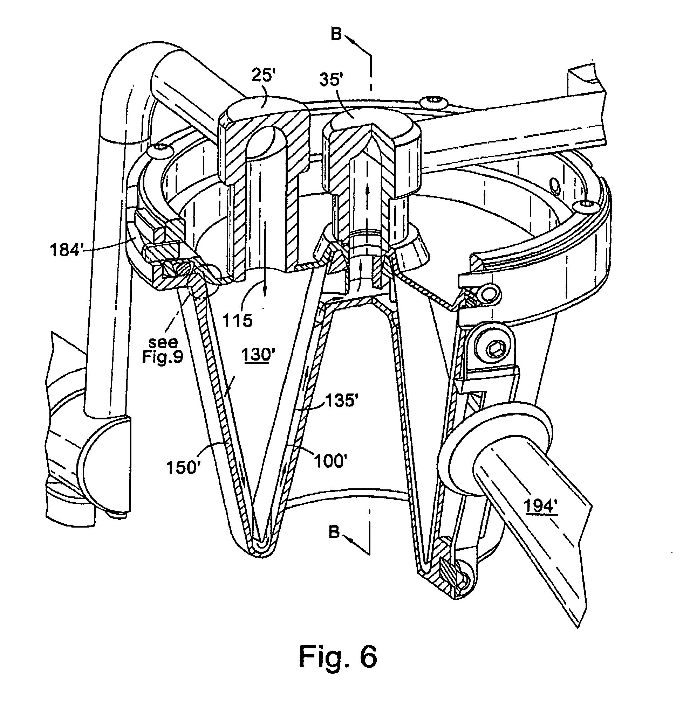

Further, in this second embodiment the transport means 175' comprises a plurality of longitudinally extending channels 180' provided on a surface 185' of the filter support body 150'. By such arrangement, in use, filtered liquid 115' passes along the filter support body 150' to outlet 35', as shown by the arrows in Figure 6.

Also in this second embodiment the releasable connection means connecting the filter support means 105' to the inlet 25' and outlet 35' comprises a quick release coupling 184' which in this example, comprises a bayonet type fitting. The quick release coupling 184' comprises a first point on the filter support means 105', which releasably engages with a second point on a lid 190', which carries to inlet 25' and outlet 35'. The filter support means 105' also has a handle 194' to assist in removal and installation thereof.

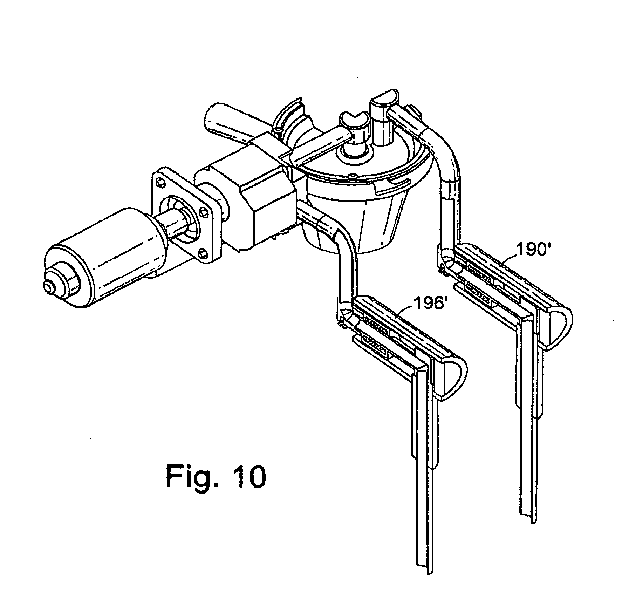

The inlet 25' includes a rotary coupling 190' and the outlet 35' comprises a further rotary coupling 195' (see Figure 10). The rotary couplings 190', 195' facilitate positioning of pipes into a frying pan (not shown).

It can also be seen from Figure 5 that the outlet 35' of the filter apparatus 10' is connected to a suction pump 46' driven by a motor 47', such that filtered liquid is returned from the filter apparatus 10' to a fryer (not shown) via the pump 46'.

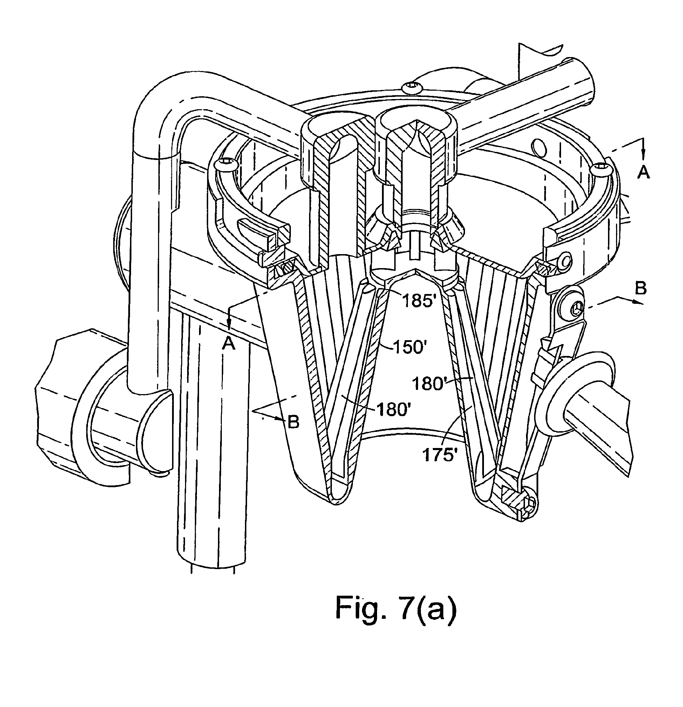

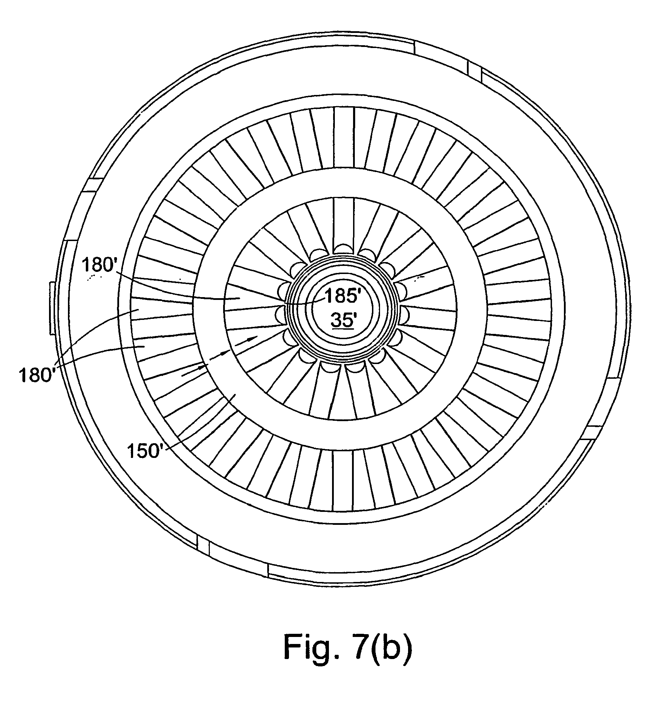

Figure 7(a) is a further perspective view to an enlarged scale of the filter apparatus 10' of Figure 5, in use, shown cut away with the filter means 100' thereof removed. With the filter means 100' removed, the transport means 175' can be more clearly seen. The transport means 175' comprises the plurality of longitudinally extending channels 180' provided on the surface 185' of the filter support body 150'. These channels 180' can also be clearly seen in Figure 7(b) which is a sectional view taken along line A - A of the filter apparatus 10' of Figure 7(a). Again the longitudinally extending channels 180' provided on the surface 185' of the filter support body 150' can be seen. By such an arrangement, in use, filtered liquid (not shown) passes along the filter support body 150' to the outlet 35' as shown by the arrows.

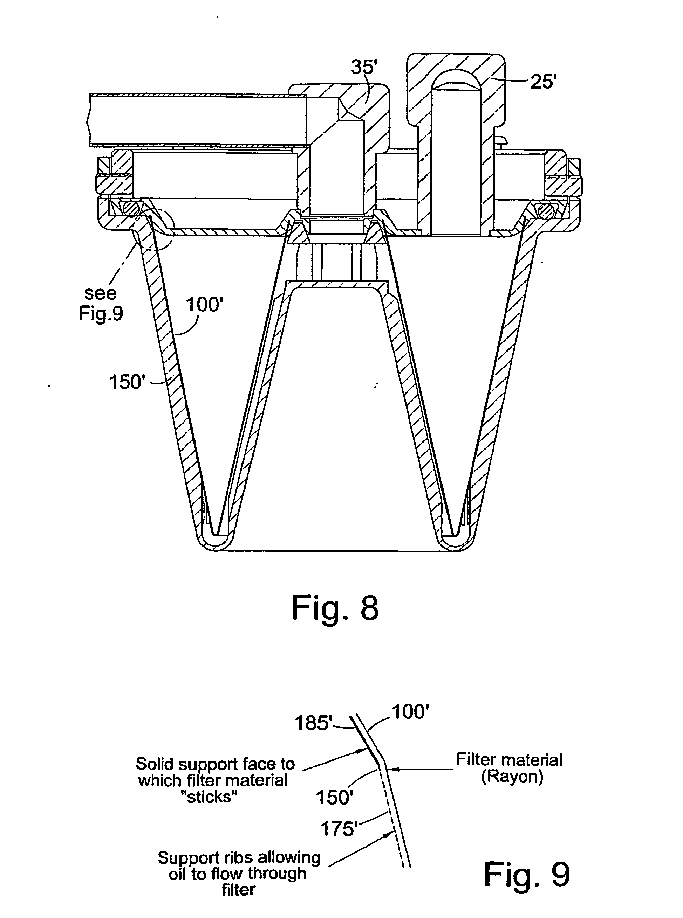

Referring to Figure 8, there is shown a sectional view taken along line B - B of the filter apparatus 10' of Figure 6. This figure clearly shows the "W" section of filter means 100' resting on the filter support body 150'.

Referring now to Figure 9, there is a shown a schematic side view of an encircled portion of the filter apparatus 10' of Figures 5 and 8 to an enlarged scale. The filter means 100' forms a seal with the internal surface 185' by viscous tension due to the viscous nature of the liquid (not shown) which is being filtered through the filter means 100'. Below this sealing arrangement, the transport means 175' guides the filtered liquid (not shown) which is passed through the filter means 100' to the outlet (not shown).

Referring now to Figure 10, there is shown an alternative perspective view of the cooking apparatus of Figure 5. This perspective view shows more clearly the inlet rotary coupling 190' and the outlet rotary coupling 195'. These rotary couplings facilitate the positioning of pipes on to the frying pan (not shown).

Figure 11 shows a cutaway perspective view of rotary coupling 195' attached to the outlet (not shown).

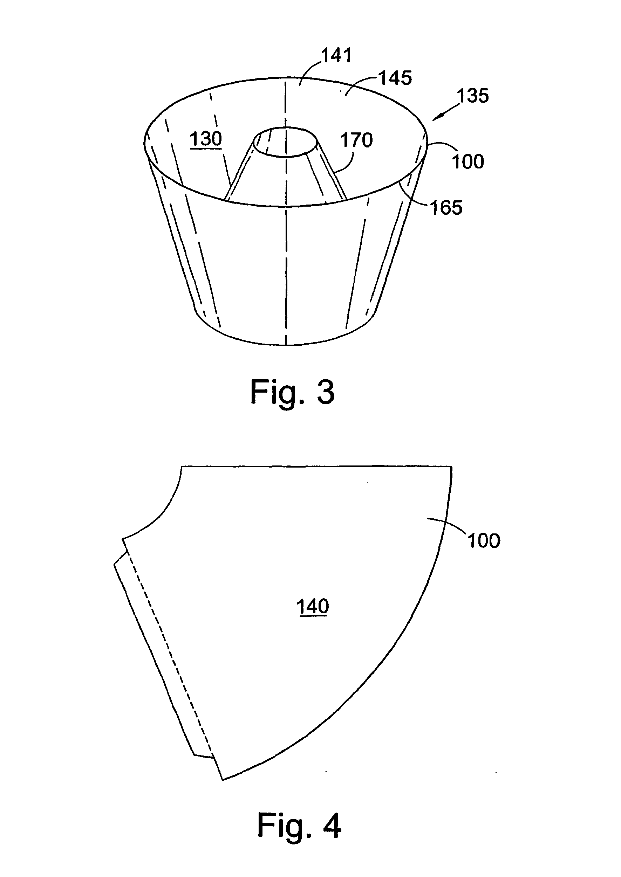

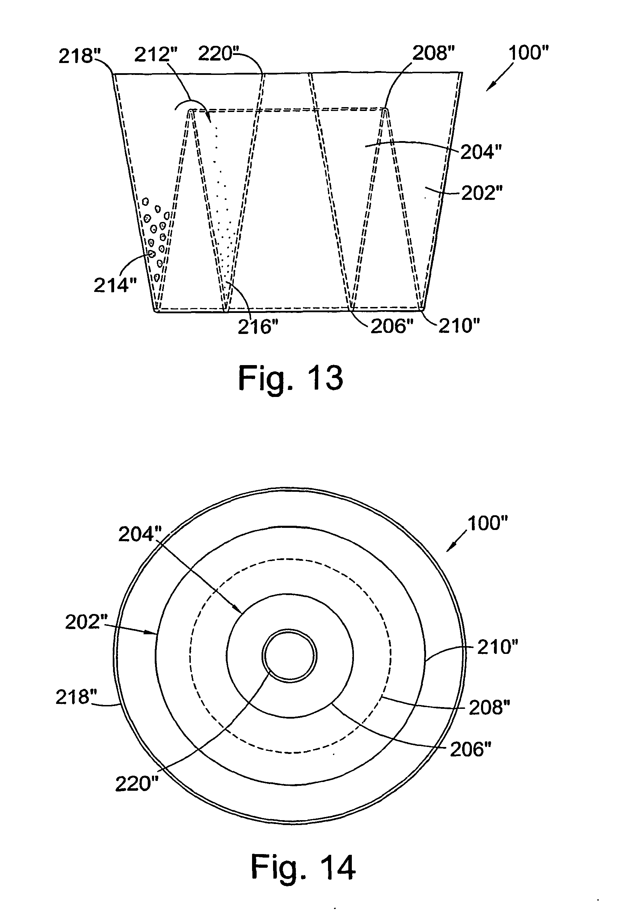

Referring now to Figures 12, 13 and 14, an alternative form of a filter means, generally indicated by reference numeral 100", in accordance with an alternative embodiment of the present invention will now be described. It should be noted that a portion of the filter means 100" in Figure 12 is shown partially cut-away for clarity. The filter means 100" is similar to that shown in Figures 2 and 3, with the exception that it comprises two annular cup portions, 202",204" which are concentrically aligned. Thus, as best shown in Figure 13. the filter means 100" has a double "W" cross-sectional shape.

The filter means 100" is formed from a single conical body which has been partially inverted three times along fold lines 206",208",210". The fold line 208" forming a rim between the two cup portions 202",204", is located lower than the outer rim 218" of the cup 202" and the inner rim 220" of the cup portion 204".

The filter means 100" is particularly advantageous in that it allows a large increase in filter surface area while maintaining the volume occupied by the filter means 100" within acceptable limits. For example, the provision of a filter means in the form of a partially inverted cone, for example of "W" (Figures 2 and 3) or double "W" (Figures 12, 13 and 14) cross-section, defines a larger ratio of filter surface area to filter means volume than a conical or "V" cross-section filter means with an equivalent filter surface area.

The filter means 100" in having two concentric annular cup portions 202",204" permits a liquid to be filtered to cascade between annular cup portions 202",204", in the direction of arrow 212". This arrangement advantageously creates a weir effect, causing each annular cup portion 202",204" to collect progressively smaller particulate or filtrate material 214", 216", as shown in Figure 13, which minimises fouling of the filter means 100", increasing the service life of the filter apparatus in which the filter means 100" is located, and accordingly reducing the frequency of cleaning and/or replacing the filter means 100".

The filter means 100" shown in Figures 12, 13 and 14 may be utilised in a filter apparatus such as those shown in Figures 2, 5 and 7, suitably modified to accommodate the additional cup portion 202". For example, the filter support means would be suitably adapted to receive and support the filter means 100".

All filter embodiments can be made of a cellulose fabric, e.g. rayon or viscose. Alternatively, the filter means may be made from paper, polyester, PTFE or the like. Beneficially, the filters are made from polyester which permits adequate heat bonding, for example, during formation of the cup and filter body.

It will be appreciated that the embodiments of the present invention hereinbefore described are given by way of example only, and are not meant to limit the scope of the invention in any way.

It will also be appreciated that the disclosed embodiments are typically, in use, likely to have a fluid flow rate of around 5 to 40 litres per minute (1-8 gallons per minute) and be capable of cleaning 5 to 40 litres of liquid (oil/fat) in around 2 to 30 minutes.

## Claims

1. A cooking oil and/or cooking fat filter apparatus (10;20'), the apparatus comprising:
a filter means (100;100';100");
a cup (130;130') for receiving matter from a liquid being filtered, in use, wherein the filter means and the cup form a single cup and filter body, and the said body comprises at least one annular cup means; and
inlet means (25;25') above the filter means for delivery of unfiltered liquid to the filter means and the cup, and outlet means (35;35') for removal of filtered liquid from the filter means;
further comprising filter support means (105,105') comprising a substantially rigid body having an inner surface which at least in part, closely fits with a discharge side surface of the filter means, the filter support means comprising at least one annular portion,
wherein the filter support means provides means (175;175') to transport filtered liquid from a discharge side of the filter means to the outlet means;
wherein, in use, at least one seal (110a; 110b) is formed between an upper end of the filter means and an upper end of the filter support means by cooking oil and/or cooking fat (115), and below said at least one seal the transport means guides filtered liquid which has passed through the filter means to the outlet means.

2. A filter apparatus as claimed in claim 1, wherein the filter means and the cup are integrally formed in the single cup and filter body.

3. A filter apparatus as claimed in either of claims 1 or 2, wherein the cup and filter body comprises a sheet form member (140) optionally including pleats.

4. A filter apparatus as claimed in claim 3, wherein the sheet form member is made from a material having filtering properties.

5. A filter apparatus as claimed in any of claims 1 to 4, wherein the cup comprises a plurality of cup means.

6. A filter apparatus as claimed in any of claims 1 to 5, wherein the cup comprises a plurality of substantially concentric annular cup means.

7. A filter apparatus as claimed in any of claims 1 to 6, wherein the filter means is made from a cellulose fabric.

8. A filter apparatus as claimed in claims 1 to. 6, wherein the filter means is made from polyester.

9. A filter apparatus as claimed in any of claims 1 to 7, where a suction side surface of the cup comprises an annular receiving space.

10. A filter apparatus as claimed in claim 1, wherein the filter support means comprises a plurality of substantially concentric annular portions.

11. A filter apparatus as claimed in either of claims 1 or 10, wherein the filter support means is manufactured from a high temperature resistant material which is suitable for use with food products.

12. A filter apparatus as claimed in claim 1, wherein the inlet means is above the filter means, when in situ, and the outlet means is below the filter means.

13. A filter apparatus as claimed in claim 1, wherein the inlet means is above the filter means, when in situ, and the outlet means is above the filter means.

14. A filter apparatus as claimed in any of claims 1 to 13, wherein the cup and filter body has a side cross-section in the shape of a "W".

15. A filter apparatus as claimed in any of claims 1 to 13, wherein the filter means has a side cross-section in the shape of a "V".

16. A filter apparatus as claimed in any of claims 1 to 15, wherein the single cup and filter body has a side cross-section in the shape of a plurality of "V"s.

17. A filter apparatus as claimed in claim 16, wherein the single cup and filter body has a side cross-section in the shape of at least four "V"s.

18. A filter apparatus as claimed in any of claims 1 to 17, wherein the filter support means has a side cross-section in the shape of a "W".

19. A filter apparatus as claimed in any one of claims 1 to 17, wherein the filter support means has a side cross-section in the shape of a "V".

20. A filter apparatus as claimed in any of claims 1 to 17, wherein the filter support means has a side cross-section in the shape of a plurality of "V"s.

21. A filter apparatus as claimed in any of claims 1 to 14, wherein the single cup and filter body comprises a first frusto-conical portion and a second frusto-conical portion, the first frusto-conical portion being provided within the second frusto-conical portion, the second frusto-conical portion being inverted relative to the first frusto-conical portion, a narrow end of the first frusto-conical portion being joined with a wide end of the second frusto-conical portion.

22. A filter apparatus as claimed in any of claims 1 to 13, wherein the single cup and filter body comprises a first frusto-conical portion and a second frusto-conical portion, the first frusto-conical portion being provided within the second frusto-conical portion, the second frusto-conical portion being inverted relative to the first frusto-conical portion, one end of one frusto-conical portion being joined with an adjacent end of an adjacent frusto-conical portion.

23. A filter apparatus as claimed in any of claims 1 to 22, wherein the single cup and filters body is substantially symmetrical about every plan extending through a central axis thereof.

24. A filter apparatus as claimed in any of claims 1 to 13, wherein the single cup and filter body is in the form of a cone.

25. A filter apparatus as claimed in any of claims 1 to 13, wherein the single cup and filter body is in the form of a cone which has been partially inverted to define a "W" cross-sectional shape, such that a single annular cup is provided.

26. A filter apparatus as claimed in claim 25, wherein the cone is partially inverted such that a lower edge of the cone is aligned with an upper edge thereof.

27. A filter apparatus as claimed either of claims 1 or 12, wherein the transport means comprises a plurality of apertures (180) in the filter support means.

28. A filter apparatus as claimed in either of claims 1 or 3, wherein the transport means comprises a plurality of channels (180') provided or formed on a surface of the filter support means.

29. A filter apparatus as claimed in any of claims 1 to 28, further comprising means for detachably attaching the filter means thereto.

30. A filter apparatus as claimed in claim 29, wherein the detachable attachment means comprises means for releasably connecting the filter support means to the inlet means and outlet means.

31. A filter apparatus as claimed in claim 30, wherein the releaseable connection means comprises a quick release coupling (185').

32. A filter apparatus as claimed in claim 1 or claims 12 to 31 when dependent upon claim 1, wherein the inlet means (25') includes a rotary coupling (190').

33. A filter apparatus as claimed in claim 1 or any of claims 12 to 32 when dependent upon claim 1, wherein the outlet means includes a further rotary coupling (195').

34. A filter apparatus as claimed in claim 1, wherein the at least one seal is provided by virtue of the liquid adhering to the at least one of the filter support means and/or filter means and providing the at least one seal through viscous tension.

35. A filter apparatus as claimed in claim 1, wherein the upper end of the filter means (100') forms the at least one seal with an internal surface (185') provided at the upper end of the filter support means (105'), the upper end of the filter support means (105') and the upper end of the filter support means (105') being flared out.

36. A cooking apparatus (5) comprising a cooking oil and/or cooking fat filter apparatus according to any of claims 1 to 35.

37. A cooking apparatus as claimed in claim 36, comprising a commercial cooking apparatus adapted for use in a food outlet, restaurant or other food retail premises.

38. A cooking apparatus as claimed in claim 36, adapted for use in a factory or other commercial food preparation premises.

39. A cooking apparatus, as claimed in any of claims 36 to 38, comprising a frying machine or deep fat/oil fryer (15) .

40. Use of a cup and filter body in a cooking oil and/or cooking fat filter apparatus according to any of claims 1 to 35.

## Patentansprüche

1. Kochöl- und/oder Kochfettfiltervorrichtung (10; 10'), wobei die Vorrichtung aufweist:
ein Filtriermittel (100; 100'; 100");
ein Gefäß (130; 130') für das Aufnehmen einer Substanz aus einer zu filtrierenden Flüssigkeit, bei Benutzung, wobei das Filtriermittel und das Gefäß einen einzelnen Gefäß- und Filterkörper bilden, und wobei der Körper mindestens ein ringförmiges Gefäßmittel aufweist; und
ein Einlassmittel (25; 25') über dem Filtriermittel für das Zuführen von nichtfiltrierter Flüssigkeit zum Filtriermittel und dem Gefäß und ein Auslassmittel (35; 35') für das Entfernen der filtrierten Flüssigkeit aus dem Filtermittel;
die außerdem ein Filterhaltemittel (105; 105') aufweist, die einen im Wesentlichen starren Körper mit einer Innenfläche aufweist, die mindestens teilweise genau zu einer Austrittsseitenfläche des Filtriermittels passt, wobei das Filterhaltemittel mindestens einen ringförmigen Abschnitt aufweist,
wobei das Filterhaltemittel ein Mittel (175; 175') bereitstellt, um die filtrierte Flüssigkeit von einer Austrittsseite des Filtriermittels zum Auslassmittel zu transportieren;
wobei bei Benutzung mindestens eine Dichtung (110a, 110b) zwischen einem oberen Ende des Filtriermittels und einem oberen Ende des Filterhaltemittels mittels des Kochöls und/oder des Kochfettes (115) gebildet wird und unterhalb der mindestens einen Dichtung das Transportmittel die filtrierte Flüssigkeit führt, die durch das Filtriermittel zum Auslassmittel bewegt wird.

2. Filtervorrichtung nach Anspruch 1, bei der das Filtriermittel und das Gefäß zusammenhängend zum einzelnen Gefäß- und Filterkörper ausgebildet sind.

3. Filtervorrichtung nach entweder Anspruch 1 oder 2, bei der der Gefäß- und Filterkörper ein Blattformelement (140) aufweist, das wahlweise Falten einschließt.

4. Filtervorrichtung nach Anspruch 3, bei der das Blattformelement aus einem Material hergestellt wird, das Filtriereigenschaften aufweist.

5. Filtervorrichtung nach irgendeinem der Ansprüche 1 bis 4, bei der das Gefäß eine Vielzahl von Gefäßmitteln aufweist.

6. Filtervorrichtung nach irgendeinem der Ansprüche 1 bis 5, bei der das Gefäß eine Vielzahl von im Wesentlichen konzentrischen, ringförmigen Gefäßmitteln aufweist.

7. Filtervorrichtung nach irgendeinem der Ansprüche 1 bis 6, bei der das Filtriermittel aus einem Celluloseerzeugnis hergestellt wird.

8. Filtervorrichtung nach Anspruch 1 bis 6, bei der das Filtriermittel aus Polyester hergestellt wird.

9. Filtervorrichtung nach irgendeinem der Ansprüche 1 bis 7, bei der eine Ansaugseitenfläche des Gefäßes einen ringförmigen Aufnahmespalt aufweist.

10. Filtervorrichtung nach Anspruch 1, bei der das Filterhaltemittel eine Vielzahl von im Wesentlichen konzentrischen, ringförmigen Abschnitten aufweist.

11. Filtervorrichtung nach entweder Anspruch 1 oder 10, bei der das Filterhaltemittel aus einem hochtemperaturbeständigen Material hergestellt wird, das für eine Verwendung bei Lebensmittelprodukten geeignet ist.

12. Filtervorrichtung nach Anspruch 1, bei der sich das Einlassmittel über dem Filtriermittel befindet, wenn es in situ ist, und bei der sich das Auslassmittel unterhalb des Filtriermittels befindet.

13. Filtervorrichtung nach Anspruch 1, bei der sich das Einlassmittel über dem Filtriermittel befindet, wenn es in situ ist, und bei der sich das Auslassmittel über dem Filtriermittel befindet.

14. Filtervorrichtung nach irgendeinem der Ansprüche 1 bis 13, bei der der Gefäß- und Filterkörper einen Seitenquerschnitt in der Form eines "W" aufweist.

15. Filtervorrichtung nach irgendeinem der Ansprüche 1 bis 13, bei der das Filtriermittel einen Seitenquerschnitt in der Form eines "V" aufweist.

16. Filtervorrichtung nach irgendeinem der Ansprüche 1 bis 15, bei der der einzelne Gefäß- und Filterkörper einen Seitenquerschnitt in der Form einer Vielzahl von "V"s aufweist.

17. Filtervorrichtung nach Anspruch 16, bei der der einzelne Gefäß- und Filterkörper einen Seitenquerschnitt in der Form von mindestens vier "V"s aufweist.

18. Filtervorrichtung nach irgendeinem der Ansprüche 1 bis 17, bei der das Filterhaltemittel einen Seitenquerschnitt in der Form eines "W" aufweist.

19. Filtervorrichtung nach irgendeinem der Ansprüche 1 bis 17, bei der das Filterhaltemittel einen Seitenquerschnitt in der Form eines "V" aufweist.

20. Filtervorrichtung nach irgendeinem der Ansprüche 1 bis 17, bei der das Filterhaltemittel einen Seitenquerschnitt in der Form einer Vielzahl von "V"s aufweist.

21. Filtervorrichtung nach irgendeinem der Ansprüche 1 bis 14, bei der der einzelne Gefäß- und Filterkörper einen ersten kegelstumpfförmigen Abschnitt und einen zweiten kegelstumpfförmigen Abschnitt aufweist, wobei der erste kegelstumpfförmige Abschnitt innerhalb des zweiten kegelstumpfförmigen Abschnittes bereitgestellt ist, wobei der zweite kegelstumpfförmige Abschnitt relativ zum ersten kegelstumpfförmigen Abschnitt umgekehrt ist, wobei ein schmales Ende des ersten kegelstumpfförmigen Abschnittes mit einem breiten Ende des zweiten kegelstumpfförmigen Abschnittes verbunden ist.

22. Filtervorrichtung nach irgendeinem der Ansprüche 1 bis 13, bei der der einzelne Gefäß- und Filterkörper einen ersten kegelstumpfförmigen Abschnitt und einen zweiten kegelstumpfförmigen Abschnitt aufweist, wobei der erste kegelstumpfförmige Abschnitt innerhalb des zweiten kegelstumpfförmigen Abschnittes bereitgestellt ist, wobei der zweite kegelstumpfförmige Abschnitt relativ zum ersten kegelstumpfförmigen Abschnitt umgekehrt ist, wobei ein Ende des einen kegelstumpfförmigen Abschnittes mit einem benachbarten Ende eines benachbarten kegelstumpfförmigen Abschnittes verbunden ist.

23. Filtervorrichtung nach irgendeinem der Ansprüche 1 bis 22, bei der der einzelne Gefäß- und Filterkörper im Wesentlichen symmetrisch um jede Ebene ist, die sich durch eine Mittelachse davon erstreckt.

24. Filtervorrichtung nach irgendeinem der Ansprüche 1 bis 13, bei der der einzelne Gefäß- und Filterkörper in der Form eines Kegels vorliegt.

25. Filtervorrichtung nach irgendeinem der Ansprüche 1 bis 13, bei der der einzelne Gefäß- und Filterkörper in der Form eines Kegels vorliegt, der teilweise umgekehrt wurde, um eine "W"-Querschnittsform zu definieren, so dass ein einzelnes ringförmiges Gefäß bereitgestellt wird.

26. Filtervorrichtung nach Anspruch 25, bei der der Kegel teilweise so umgekehrt ist, dass ein unterer Rand des Kegels mit einem oberen Rand davon ausgerichtet ist.

27. Filtervorrichtung nach entweder Anspruch 1 oder 12, bei der das Transportmittel eine Vielzahl von Öffnungen (180) in dem Filterhaltemittel aufweist.

28. Filtervorrichtung nach entweder Anspruch 1 oder 3, bei der das Transportmittel eine Vielzahl von Kanälen (180') aufweist, die auf einer Oberfläche des Filterhaltemittels bereitgestellt werden oder ausgebildet sind.

29. Filtervorrichtung nach irgendeinem der Ansprüche 1 bis 28, die außerdem ein Mittel für das lösbare Befestigen des Filtriermittels daran aufweist.

30. Filtervorrichtung nach Anspruch 29, bei der das lösbare Befestigungsmittel ein Mittel für das lösbare Verbinden des Filterhaltemittels mit dem Einlassmittel und dem Auslassmittel aufweist.

31. Filtervorrichtung nach Anspruch 30, bei der das lösbare Verbindungsmittel eine schnell lösbare Kupplung (185') aufweist.

32. Filtervorrichtung nach Anspruch 1 oder Ansprüchen 12 bis 31, wenn sie vom Anspruch 1 abhängig sind, bei der das Einlassmittel (25') eine Rotationskupplung (190') umfasst.

33. Filtervorrichtung nach Anspruch 1 oder irgendeinem der Ansprüche 12 bis 32, wenn sie vom Anspruch 1 abhängig sind, bei der das Auslassmittel eine weitere Rotationskupplung (195') umfasst.

34. Filtervorrichtung nach Anspruch 1, bei der die mindestens eine Dichtung mittels der Flüssigkeit bereitgestellt wird, die an mindestens einem vom Filterhaltemittel und/oder Filtriermittel haftet, und die die mindestens eine Dichtung durch eine viskose Spannung bewirkt.

35. Filtervorrichtung nach Anspruch 1, bei der das obere Ende des Filtriermittels (100') die mindestens eine Dichtung mit einer Innenfläche (185') bildet, die am oberen Ende des Filterhaltemittels (105') bereitgestellt wird, wobei das obere Ende des Filterhaltemittels (105') und das obere Ende des Filterhaltemittels (105') aufgeweitet sind.

36. Kochvorrichtung (5), die eine Kochöl- und/oder Kochfettfiltervorrichtung nach irgendeinem der Ansprüche 1 bis 35 aufweist.

37. Kochvorrichtung nach Anspruch 36, die eine kommerzielle Kochvorrichtung aufweist, die für einen Einsatz in einem Lebensmittelgeschäft, Restaurant oder anderen Lebensmitteleinzelhandelsbetrieben geeignet ist.

38. Kochvorrichtung nach Anspruch 36, die für eine Verwendung in einer Fabrik oder anderen kommerziellen Lebensmittelherstellungsbetrieben ausgebildet ist.

39. Kochvorrichtung nach irgendeinem der Ansprüche 36 bis 38, die eine Bratmaschine oder Fritteuse (15) aufweist.

40. Einsatz eines Gefäß- und Filterkörpers in einer Kochöl- und/oder Kochfettfiltervorrichtung nach irgendeinem der Ansprüche 1 bis 35.

## Revendications

1. Appareil de filtration (10; 10') d'huile à friture et/ou de graisse à friture, l'appareil comprenant :
un moyen de filtre (100; 100'; 100");
une coupelle (130; 130') pour recevoir des matières d'un liquide filtré en service, le moyen de filtre et la coupelle formant un corps d'une seule pièce de coupelle et de filtre, ledit corps comprenant au moins un moyen de coupelle annulaire; et
un moyen d'entrée (25; 35') au-dessus du moyen de filtre, pour amener le liquide non filtré vers le moyen de filtre et la coupelle, et un moyen de sortie (35; 35') pour éliminer le liquide filtré du moyen de filtre;
comprenant en outre un moyen de support du filtre (105; 105'), comprenant un corps pratiquement rigide comportant une surface interne ajustée étroitement, au moins en partie, sur une surface latérale de décharge du moyen de filtre, le moyen de support du filtre comprenant au moins une partie annulaire;
le moyen de support du filtre fournissant un moyen (175; 175') pour transporter le liquide filtré d'un côté de décharge du moyen de filtre vers le moyen de sortie;
au moins un joint d'étanchéité (110a; 110b) étant formé en service, entre une extrémité supérieure du moyen de filtre et une extrémité supérieure du moyen de support du filtre, par l'huile et/ou la graisse à friture (115), le moyen de transport guidant, au-dessous du au moins un joint d'étanchéité, le liquide filtré ayant passé à travers le moyen de filtre vers le moyen de sortie.

2. Appareil de filtration selon la revendication 1, dans lequel le moyen de filtre et la coupelle sont formés d'une seule pièce dans le corps d'une seule pièce de la coupelle et du filtre.

3. Appareil de filtration selon les revendications 1 ou 2, dans lequel le corps de la coupelle et du filtre comprend un élément en forme de feuille (140) englobant optionnellement des plis.

4. Appareil de filtration selon la revendication 3, dans lequel l'élément en forme de feuille est composé d'un matériau présentant des propriétés de filtration.

5. Appareil de filtration selon l'une quelconque des revendications 1 à 4, dans lequel la coupelle comprend plusieurs moyens de coupelle.

6. Appareil de filtration selon l'une quelconque des revendications 1 à 5, dans lequel la coupelle comprend plusieurs moyens de coupelle annulaires pratiquement concentriques.

7. Appareil de filtration selon l'une quelconque des revendications 1 à 6, dans lequel le moyen de filtre est composé d'un tissu de cellulose.

8. Appareil de filtration selon les revendications 1 à 6, dans lequel le moyen de filtre est composé de polyester.

9. Appareil de filtration selon l'une quelconque des revendications 1 à 7, dans lequel une surface latérale d'aspiration de la coupelle comprend un espace de réception annulaire.

10. Appareil de filtration selon la revendication 1, dans lequel le moyen de support du filtre comprend plusieurs parties annulaires pratiquement concentriques.

11. Appareil de filtration selon l'une des revendications 1 ou 10, dans lequel le moyen de support du filtre est fabriqué à partir d'un matériau résistant aux températures élevées, approprié pour une utilisation avec des produits alimentaires.

12. Appareil de filtration selon la revendication 1, dans lequel le moyen d'entrée est agencé, lors de sa mise en place, au-dessus du moyen de filtre, le moyen de sortie étant agencé au-dessous du moyen de filtre.

13. Appareil de filtration selon la revendication 1, dans lequel le moyen d'entrée est agencé, lors de sa mise en place, au-dessus du moyen de filtre, le moyen de sortie étant agencé au-dessus du moyen de filtre.

14. Appareil de filtration selon l'une quelconque des revendications 1 à 13, dans lequel le corps de la coupelle et du filtre a une section transversale latérale en forme de « W ».

15. Appareil de filtration selon l'une quelconque des revendications 1 à 13, dans lequel le moyen de filtre a une section transversale latérale en forme de « V ».

16. Appareil de filtration selon l'une quelconque des revendications 1 à 15, dans lequel le corps d'une seule pièce de la coupelle et du filtre a une section transversale latérale en forme de plusieurs « V ».

17. Appareil de filtration selon la revendication 16, dans lequel le corps d'une seule pièce de la coupelle et du filtre a une section transversale latérale en forme d'au moins quatre « V ».

18. Appareil de filtration selon l'une quelconque des revendications 1 à 17, dans lequel le moyen de support du filtre a une section transversale latérale en forme de « W ».

19. Appareil de filtration selon l'une quelconque des revendications 1 à 17, dans lequel le moyen de support d filtre a une section transversale latérale en forme de « V ».

20. Appareil de filtration selon l'une quelconque des revendications 1 à 17, dans lequel le moyen de support du filtre a une section transversale latérale en forme de plusieurs « V ».

21. Appareil de filtration selon l'une quelconque des revendications 1 à 4, dans lequel le corps d'une seule pièce de la coupelle et du filtre comprend une première partie en tronc de cône et une deuxième partie en tronc de cône, la première partie en tronc de cône étant agencée dans la deuxième partie en tronc de cône, la deuxième partie en tronc de cône étant inversée par rapport à la première partie en tronc de cône, une extrémité étroite de la première partie en tronc de cône étant reliée à une extrémité large de la deuxième partie en tronc de cône.

22. Appareil de filtration selon l'une quelconque des revendications 1 à 13, dans lequel le corps d'une seule pièce de la coupelle et du filtre comprend une première partie en tronc de cône et une deuxième partie en tronc de cône, la première partie en tronc de cône étant agencée dans la deuxième partie en tronc de cône, la deuxième partie en tronc de cône étant inversée par rapport à la première partie en tronc de cône, une extrémité d'une partie en tronc de cône étant reliée à une extrémité adjacente d'une partie en tronc de cône adjacente.

23. Appareil de filtration selon l'une quelconque des revendications 1 à 22, dans lequel le corps d'une seule pièce de la coupelle et du filtre est pratiquement symétrique à chaque plan s'étendant à travers un axe central de celui-ci.

24. Appareil de filtration selon l'une quelconque des revendications 1 à 13, dans lequel le corps d'une seule pièce de la coupelle et du filtre a la forme d'un cône.

25. Appareil de filtration selon l'une quelconque des revendications 1 à 13, dans lequel le corps d'une seule pièce de la coupelle et du filtre a la forme d'un cône ayant en partie été inversé pour définir une forme de section transversale en « W », une seule coupelle annulaire étant ainsi fournie.

26. Appareil de filtration selon la revendication 25, dans lequel le cône est en partie inversé, de sorte qu'un bord inférieur du cône est aligné avec un bord supérieur de celui-ci.

27. Appareil de filtration selon l'une des revendications 1 ou 12, dans lequel le moyen de transport comprend plusieurs ouvertures (180) dans le moyen de support du filtre.

28. Appareil de filtration selon l'une des revendications 1 ou 3, dans lequel le moyen de transport comprend plusieurs canaux (180') agencés ou formés sur une surface du moyen de support du filtre.

29. Appareil de filtration selon l'une quelconque des revendications 1 à 28, comprenant en outre un moyen pour y fixer de manière amovible le moyen de filtre.

30. Appareil de filtration selon la revendication 29, dans lequel le moyen de fixation amovible comprend un moyen pour connecter de manière amovible le moyen de support du filtre au moyen d'entrée et au moyen de sortie.

31. Appareil de filtration selon la revendication 30, dans lequel le moyen de connexion amovible comprend un raccord rapide (185').

32. Appareil de filtration selon la revendication 1 ou selon les revendications 12 à 31, dépendant de la revendication 1, dans lequel le moyen d'entrée (25') englobe un raccord rotatif (190').

33. Appareil de filtration selon la revendication 1 ou selon l'une quelconque des revendications 12 à 32, dépendant de la revendication 1, dans lequel le moyen de sortie englobe un raccord rotatif additionnel (195').

34. Appareil de filtration selon la revendication 1, dans lequel au moins un joint d'étanchéité est établi par le liquide adhérant sur au moins un moyen, le moyen de support du filtre et/ou le moyen de filtre, le au moins un joint d'étanchéité étant établi par tension visqueuse.

35. Appareil de filtration selon la revendication 1, dans lequel l'extrémité supérieure du moyen de filtre (100') forme le au moins un joint d'étanchéité avec une surface interne (185') agencée au niveau de l'extrémité supérieure du moyen de support du filtre (105'), l'extrémité supérieure du moyen de support du filtre (105') et l'extrémité supérieure du moyen de support du filtre (105') étant évasées vers l'extérieur.

36. Appareil de cuisson (5), comprenant un appareil de filtration de l'huile à friture et/ou de la graisse à friture selon l'une quelconque des revendications 1 à 35.

37. Appareil de cuisson selon la revendication 36, comprenant un appareil de cuisson commercial adapté pour être utilisé dans un point de vente de produits alimentaires, un restaurant ou d'autres établissements de vente au détail de produits alimentaires.

38. Appareil de cuisson selon la revendication 36, adapté pour être utilisé dans une usine ou d'autres établissements commerciaux de préparation de produits alimentaires.

39. Appareil de cuisson selon l'une quelconque des revendications 36 à 38, comprenant un appareil à friture ou une friteuse à graisse/à huile (15).

40. Utilisation d'un corps de coupelle et de filtre dans un appareil de filtration d'huile et/ou de graisse à friture selon l'une quelconque des revendications 1 à 35.
